# EUROPÄISCHE PATENTSCHRIFT

(11) **EP 3 062 998 B1**
(45) Veröffentlichungstag und Bekanntmachung des Hinweises auf die Patenterteilung: **07.11.2018**
(21) Anmeldenummer: 14744055.6
(22) Anmeldetag: 23.07.2014
(51) Int. Cl.: B29D 30/32

(54) **VORRICHTUNG ZUR HERSTELLUNG EINES FAHRZEUGREIFENS**
DEVICE FOR PRODUCING A VEHICLE TYRE
DISPOSITIF DE PRODUCTION D'UN PNEU DE VÉHICULE

(30) Priorität: 29.10.2013 DE 102013221967
(43) Veröffentlichungstag der Anmeldung: 07.09.2016
(73) Patentinhaber: Continental Reifen Deutschland GmbH, 30165 Hannover (DE)
(72) Erfinder: LINNE, Stefan, 30900 Wedemark (DE); REITMANN, Sebastian, 31558 Hagenburg (DE); GERIGHAUSEN, Martin, 30890 Barsinghausen (DE)
(74) Vertreter: Widjaja, Wira
(86) Internationale Anmeldenummer: PCT/EP2014/065781
(87) Internationale Veröffentlichungsnummer: WO 2015/062753

(56) Entgegenhaltungen:
- EP-A1- 2 508 331
- DE-A1- 1 753 663
- DE-A1- 19 942 220
- JP-A- S57 182 419
- JP-A- 2003 033 977
- JP-A- 2011 101 971
- JP-U- S4 861 170

## Beschreibung

Die Erfindung betrifft eine Vorrichtung zur Herstellung eines Fahrzeugreifens. pBei herkömmlichen Reifenaufbauverfahren werden auf der Karkasstrommel beide Seitenwände aufgewickelt. Anschließend wird die Reifenkarkasse mit den bereits applizierten Seitenwänden zu der Bombiertrommel verfahren. Ein Nachteil bei diesem herkömmlichen Verfahren besteht darin, dass bestimmte Reifenkonstruktionen nicht realisierbar sind.
Die Bombiertrommel ist im allgemeinen relativ komplex aufgebaut, da sie mehrere Funktionen erfüllen muss. Es ist bekannt, dass an einer Bombiertrommel sogenannte Pusherglocken eingesetzt werden, die das Hochschlagen der Seitenwände an der Reifenkarkasse unterstützen sollen. Das Hochschlagen und das Verbinden der Seitenwände mit der Reifenkarkasse kann aufgrund verschiedener Gründe mit Fertigungsungenauigkeiten verbunden sein.
Die DE 199 42 220 A1 offenbart eine herkömmliche Vorrichtung zum Herstellen von Fahrzeugreifen.

Der Erfindung liegt die Aufgabe zugrunde, ein verbesserte Vorrichtung zur Herstellung von Fahrzeugreifen bereitzustellen.
Durch die Vorrichtung soll insbesondere das Hochschlagen und Verbinden der Seitenwände mit der Reifenkarkasse verbessert werden.

Gelöst wird die Aufgabe gemäß dem Oberbegriff und den kennzeichnenden Merkmalen von Anspruch 1 dadurch, dass
die Antriebe für den ersten und zweiten verfahrbaren Schlitten mit den jeweiliegen Antriebspindeln an einem dritten Schlitten gelagert sind,
wobei alle drei Schlitten beweglich zur Rohlingsmitte an dem Schienensystem gelagert
sind, wobei über den dritten Schlitten eine schwimmende Lagerung der beiden Pusherglocken in Bezug auf die Rohlingsmitte erreicht wird,
wobei am dritten Schlitten ein Ausgleichsmittel angeordnet ist und mit dem Ausgleichsmittel eine Verlagerungsbewegung des Mittenversatzes der beiden Pusherglocken in Bezung auf die Rohlingsmitte reguliert wird.

Ein Vorteil der Erfindung ist insbesondere darin zu sehen, dass die Fertigungsqualität beim Hochschlagen und Verbinden der Seitenwände mit der Reifenkarkasse wesentlich verbessert wird. Aufgrund unterschiedlicher Materialeigenschaften der Bombierbälge kann bei herkömmlichen Herstellungsverfahren ein Kräfteungleichgewicht entstehen, das zum einen den Reifenrohling deformiert und zum anderen die Mechanik des Bombierkopfes bzw. der Bombiertrommel zu stark belastet. Beispielsweise aufgrund eines Alterungsprozesses kann es vorkommen, dass einer der beiden Bombierbälge beim Zusammendrücken mehr aufgebläht wird. Insbesondere durch das Ausgleichen der Andrückposition der beiden Pusherglocken lässt sich das Kräfteungleichgewicht wieder ausgleichen. Alle drei Schlitten sind zusammen frei beweglich zur Rohlingsmitte an einem Schienensystem angeordnet, wodurch von beiden Seiten ein gleichmäßiger Anpressdruck durch die verschobenen Pusherglocken aufgebracht werden kann. Auf diese Weise werden die Seitenwände auf beiden Seiten der Reifenkarkasse gleichmäßig mit der Außenseite der Reifenkarkasse verbunden und damit die Fertigugnsqualität wesentlich verbessert.
Durch das Ausgleichsmittel wird einer Übersteuerung der Verlagerungsbewegung der Pusherglocken entgegengewirkt.
Durch eine Verlagerungsbewegung der Pusherglocken kann der Fall eintreten, dass beide Pusherglocken bezogen auf die Rohlingsmitte zu weit nach links oder nach rechts abdriften. In einem solchen Fall würde das Ausgleichsmittel aktiviert werden und dieser Übersteuerung der Verlagerungsbewegung entgegenwirken. Auf diese Weise ist sichergestellt, dass die beiden Pusherglocken einen vorgegebenen Toleranzbereich für die Verlagerungsbewegung nicht überschreiten. Bei einer Übersteuerung der Verlagerungsbewegung der beiden Pusherglocken könnte die Fertigungsqualität beim Bombieren des Fahrzeugreifens beeinträchtigt werden. Durch den Einsatz des Ausgleichsmittels wird eine hohe und gleichbleibende Fertigungsqualität des Fahrzeugreifens gewährleistet.

In einer vorteilhaften Weiterbildung der Erfindung ist vorgesehen, dass das Ausgleichsmittel ein Servomotor mit einem Kugelgewindetrieb ist.
Mit dem Servomotor und dem Kugelgewindetrieb lässt sich der Ausgleich mit einer hohen Genauigkeit durchführen.

In einer weiteren vorteilhaften Weiterbildung der Erfindung ist vorgesehen, dass der Kugelgewindetrieb über ein koaxial angeordnetes Gewinde mit dem dritten Schlitten gekoppelt ist. Dadurch lässt sich eine direkte Kraftkopplung mit dem dritten Schlitten erreichen.

In einer weiteren vorteilhaften Weiterbildung der Erfindung ist vorgesehen, dass der Kugelgewindetrieb über eine koaxial angeordnete Mutter und Federelementen mit dem dritten Schlitten gekoppelt ist. Insbesondere durch den Einsatz der Federelemente lässt sich eine stetig ansteigende Kraft aufbringen, mit der einer Verlagerungsbewegung der Pusherglocken entgegengewirkt werden kann.

In einer weiteren vorteilhaften Weiterbildung der Erfindung ist vorgesehen, dass die Mutter des Kugelgewindetriebes beidseitig von Federelementen eingespannt ist und die Federelemente an den äußeren Seiten mit einem Haltemittel am dritten Schlitten gehalten werden. Auf diese Weise lässt sich eine indirekte Kraftübertragung auf den dritten Schlitten realisieren.

In einer weiteren vorteilhaften Weiterbildung der Erfindung ist vorgesehen, dass die Mutter des Kugelgewindetriebes mit einer Passfeder in einer Führungsnut am dritten Schlitten in axialer Richtung geführt wird. Auf diese Weise wird eine einfache und genaue Führung der Mutter entlang des dritten Schlittens realisiert.

In einer vorteilhaften Weiterbildung der Erfindung ist vorgesehen, dass beim Ausgleichen des Kräfteungleichgewichtes der Abstand der Pusherglocken zueinander in axialer Richtung im Wesentlichen beibehalten wird.
Dadurch lässt sich auf beiden Seiten der Bombierbälge ein gleichmäßiger Anpressdruck aufbringen.

In einer weiteren vorteilhaften Weiterbildung der Erfindung ist vorgesehen, dass die Kopplung der Antriebe für die Pusherglocken jeweils mit einer ersten und zweiten Antriebsspindel erfolgt, wobei über eine Drehung der Antriebsspindeln die Pusherglocken in axialer Richtung verfahren werden.
Dadurch lassen sich die Pusherglocken mit einer hohen Genauigkeit in axialer Richtung verfahren.

In einer weiteren vorteilhaften Weiterbildung der Erfindung ist vorgesehen, dass alle drei Schlitten an einem Schienensystem mit zwei Führungsschienen angeordnet sind, wobei die Schlitten in axialer Richtung an den Führungsschienen in Form von einer schwimmenden Lagerung angeordnet sind. Durch die Verwendung der Führungsschienen lassen sich die Pusherglocken mit einer hohen Genauigkeit in axialer Richtung verfahren. Außerdem lässt sich mit den Führungsschienen die schwimmende Lagerung einfach und mit einer hohen Genauigkeit umsetzen.

In einer weiteren vorteilhaften Weiterbildung der Erfindung ist vorgesehen, dass beim Überschreiten eines Grenzwertes für den Mittenversatz der beiden Pusherglocken eine entgegenwirkende Gegenkraft mit dem Servomotor auf den dritten Schlitten aufgebracht wird. Dadurch wird der Servomotor erst dann aktiviert, wenn ein vorgegebener Mittenversatz überschritten wird.

In einer weiteren vorteilhaften Weiterbildung der Erfindung ist vorgesehen, dass der Grenzwert für den Mittenversatz 4 bis 8 mm beträgt. Bei Erreichen dieses Grenzwertes lässt sich eine optimale Regelung für den Servomotor einsetzen.

In einer weiteren vorteilhaften Weiterbildung der Erfindung ist vorgesehen, dass die Wegmessung des Mittenversatzes der Pusherglocken mit einem im Servomotor angeordneten Sensor erfolgt. Dadurch lässt sich der Mittenversatz der Pusherglocken mit dem Servomotor einfacher regeln.

In einer weiteren vorteilhaften Weiterbildung der Erfindung ist vorgesehen, dass die Wegmessung des Mittenversatzes der Pusherglocken mit einem linearen Wegmesssytem erfolgt, wobei das Wegmesssystem mit der Bewegung des dritten Schlitten gekoppelt ist. Mit dem linearen Wegmesssystem lässt sich die Verlagerungsbewegung der beiden Pusherglocken mit einer hohen Genauigkeit und Messgeschwindigkeit bestimmen.

In einer weiteren vorteilhaften Weiterbildung der Erfindung ist vorgesehen, dass jeweils die Abstände der Pusherglocken zu einander und die Abstände der Pusherglocken im Verhältnis zur Rohlingsmitte gemessen, überwacht und/oder geregelt werden.
Auf diese Weise lässt sich eine optimale Regelung des Mittenversatzes der Pusherglocken erzielen.

Anhand eines Ausführungsbeispieles soll die Erfindung näher erläutert werden. Es zeigen:

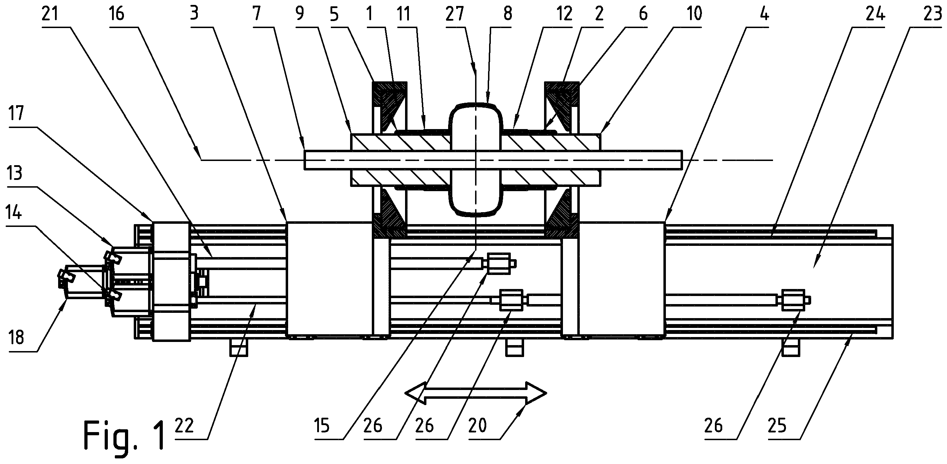

- Figuren 1 bis 4:: mehrere Ausführungsbeispiele der Vorrichtung.

Die Figur 1 zeigt die Bombierstation mit der Bombiertrommel und dem linken und rechten Bombierkopf 9 und 10 in einer Schnittansicht. Die Reifenkarkasse 8 ist in einem bombierten Zustand dargestellt und wird durch die Bombierköpfe 9 und 10 gehalten. Die linke und rechte Seitenwand 11 und 12 liegen jeweils auf einem linken und einem rechten Bombierbalg 5 und 6 auf, wobei die Bombierbälge im nicht aufgeblähten Zustand dargestellt sind. Denkbar ist ebenfalls, dass über den Seitenwänden 11 und 12 noch ein Einlagenende aufliegt, welches ebenfalls mit den Seitenwänden hochgeschlagen werden soll. Auf beiden Seiten der Reifenkarkasse 8 sind jeweils eine linke Pusherglocke 1 und eine rechte Pusherglocke 2 in einer Warteposition angeordnet. Die Bombiertrommel wird insbesondere durch die Trommelwelle 7 angetrieben, die um die Mittelachse 16 der Trommelwelle rotiert. Die Pusherglocken 5 und 6 sind jeweils auf einem verfahrbaren Schlitten 3 und 4 angeordnet. Die Schlitten werden über das Schienensystem 23 mit einer oberen Führungsschiene 24 und einer unteren Führungsschiene 25 gehalten. Die beiden Schlitten 3 und 4 werden in axialer Richtung 20 aufeinander zubewegt, um dadurch das Hochschlagen der Seitenwände zu unterstützen. Der Antrieb des zweiten Schlittens 3 erfolgt mit dem Antrieb 13 über die Antriebsspindel 21. Die Antriebsspindel 21 wird auf der gegenüberliegenden Seite durch eine Lagerung 26 gehalten. Bei Rotation der Antriebsspindel 21 bewegt sich der Schlitten 3 in axialer Richtung 20 nach links oder nach rechts. Bei einer Rotationsbewegung der Antriebsspindel 22 bewegt sich der Schlitten 4 ebenfalls nach links oder rechts in axialer Richtung 20. Die Antriebsspindel 22 ist durch den Schlitten 3 hindurchgeführt und an zwei Stellen über die Lagerung 26 gelagert. Die Antriebsspindel 22 wird von dem Servomotor 14 angetrieben. Die Servomotoren 13 und 14 sind mit den Antriebsspindeln 21 und 22 auf einem dritten Schlitten 17 gelagert. Dieser dritte Schlitten 17 ist wiederum beweglich am Schienensystem 23 in axialer Richtung beweglich angeordnet. Auf diese Weise sind alle drei Schlitten 17, 3 und 4 zusammen beweglich zur Rohlingsmitte 15 angeordnet. Dadurch wird eine schwimmende Lagerung der beiden Pusherglocken 1 und 2 in Bezug auf die Rohlingsmitte 15 realisiert. Der Servomotor 18 ist am dritten Schlitten 17 angeordnet und hat die Funktion eines Ausgleichsmittels bei einer Übersteuerung des Mittenversatzes von linker oder rechter Pusherglocke 1 und 2.

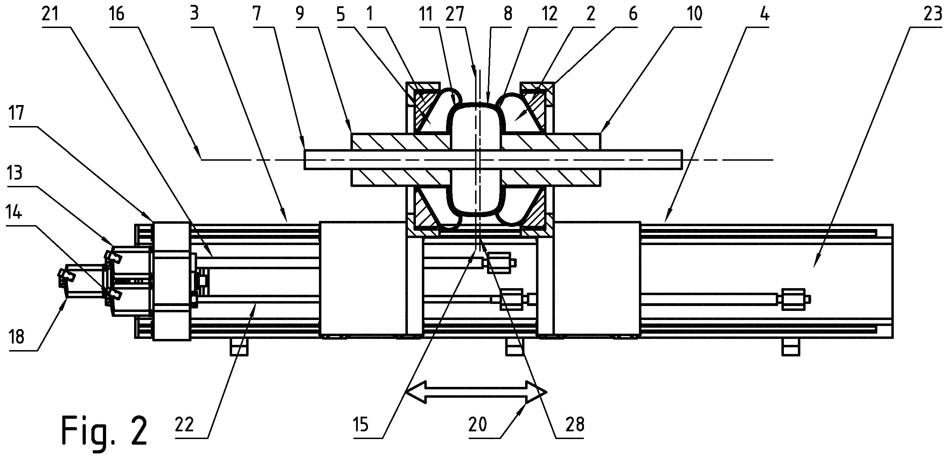

Die Figur 2 zeigt den Verfahrensschritt, bei dem die Seitenwände 11 und 12 mit den aufgeblähten Bombierbälgen 5 und 6 an der Reifenkarkasse 8 hochgeschlagen werden. Bei diesem Vorgang werden die beiden Pusherglocken 1 und 2 in axialer Richtung zur Rohlingsmitte 15 verfahren, so dass die Pusherglocken gegen die aufgeblähten Bombierbälge drücken und dadurch die oberen Enden der Seitenwände ebenfalls gegen die Reifenkarkasse 8 gedrückt werden. In der Figur ist ein Zustand dargestellt, bei dem aufgrund einer unterschiedlichen Beschaffenheit der Bälge sich ein Kräfteungleichgewicht eingestellt hat. Der linke Seitenbombierbalg 5 lässt sich mehr zusammendrücken als der rechte Bombierbalg 6. Aufgrund dieses Kräfteungleichgewichtes erfolgt ein Mittenversatz der beiden Pusherglocken 1 und 2 in Bezug auf die ursprüngliche Rohlingsmitte 15. Durch diesen Ausgleich des Mittenversatzes wandert die Symmetrielinie der Pusherglocken 27 nach dem Mittenversatz in axialer Richtung 20 nach links. Bei diesem Vorgang wird der Abstand in axialer Richtung zwischen den beiden Pusherglocken 1 und 2 im Wesentlichen beibehalten. Der Mittenversatz der beiden Pusherglocken 1 und 2 erfolgt durch die schwimmende Lagerung der drei Schlitten, die am Schienensystem 23 angeordnet sind. Bei dem Mittenversatz bewegen sich alle drei Schlitten 17, 3 und 4 in gleicher Richtung, wobei der Abstand zueinander beibehalten wird. Alle drei Schlitten sind durch das Schienensystem 23 und durch die Antriebsspindeln 21 und 22 miteinander in ihrer Bewegung gekoppelt. Mit dem Servomotor 18 lässt sich der Mittenversatz bei einer Übersteuerung regeln. Die Figur 2 zeigt im wesentlichen den Zustand, bei dem das Kräftegleichgewicht wieder hergestellt ist. Die beiden Pusher 1 und 2 sind asymmetrisch zur Rohlingsmitte 15 positioniert, und die Bombierbälge erheben sich unterschiedlich um den dargestellten Reifenrohling herum. Im Normalfall ist diese Art von Ausgleich optimal einsetzbar, um die Seitenwände auf beiden Seiten gleichmäßig hochschlagen zu können. Ist jedoch der Kraftunterschied auf beiden Seiten zu groß, kann es passieren, dass die Seitenwand 12 auf der Seite mit dem stärkeren Anpressdruck nicht komplett hochgeschlagen wird. Oder aber es kann der Fall eintreten, dass die Pusherglocke 1 auf der Seite mit dem schwächeren Druck gegen die Karkasse 8 verdrückt wird. Um einem solchen Zustand entgegenzuwirken, ist am dritten Schlitten ein Servomotor 18 als Ausgleichsmittel angeordnet.

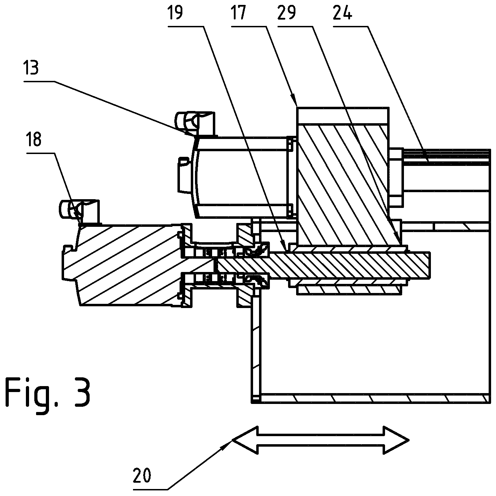

Die Figur 3 zeigt ein erstes Ausführungsbeispiel für das Ausgleichsmittel mit dem Servomotor 18 und mit dem Kugelgewindetrieb 19. Mit dem Kugelgewindetrieb 19 lässt sich eine Gegenkraft zum dritten Schlitten 17 aufbringen. Mit dieser Gegenkraft lässt sich einer Übersteuerung des Mittenversatzes entgegenwirken. Koaxial zum Kugelgewindetrieb 19 ist ein Gewinde 29 angeordnet, welches mit dem dritten Schlitten 17 verbunden ist. Der dritte Schlitten 17 ist frei beweglich an der oberen Schiene 24 angeordnet.

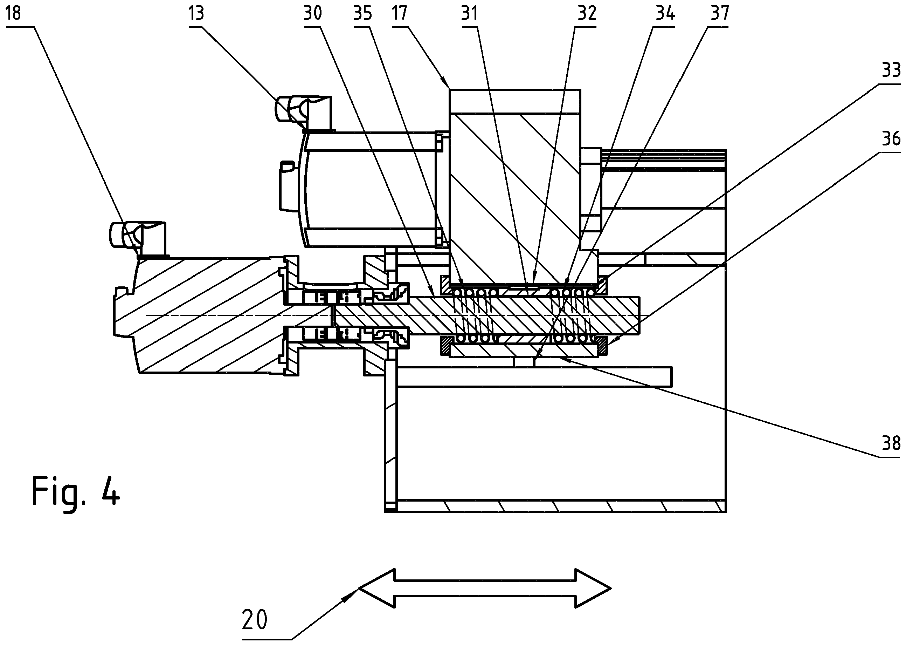

Die Figur 4 zeigt ein weiteres Ausführungsbeispiel für das Ausgleichsmittel zum Aufbringen einer Gegenkraft bei einer zu großen Verlagerungsbewegung. Der Servomotor 18 treibt den dargestellten Kugelgewindetrieb 30 an. Bei einer Rotationsbewegung des Kugelgewindetriebes 30 bewegt sich die Mutter 31 nach links oder nach rechts. Am äußeren Umfang der Mutter 31 ist eine Passfeder 32 angeordnet, die in einer Führungsnut 33 am dritten Schlitten 17 anliegt. Die Passfeder 32 gleitet entlang der Führungsnut 33, wenn sich die Mutter 31 nach links oder nach rechts bewegt. Die Mutter 31 drückt bei einer Bewegung nach rechts gegen das rechte Federelement 34, welches durch ein Haltemittel 36 am dritten Schlitten 17 gehalten wird. Wenn sich die Mutter 31 nach rechts bewegt, wird eine Kraft auf den dritten Schlitten 17 aufgebracht, die diesen Schlitten ebenfalls in axialer Richtung nach rechts bewegt. Durch diesen Vorgang wird eine entsprechende Gegenkraft am dritten Schlitten 17 aufgebracht, um einer zu großen Verlagerungsbewegung der Pusherglocken entgegen zu wirken. Am Gehäuse 35 ist auf der Unterseite ein lineares Wegmesssystem 37 angeordnet. Mit dem Wegmesssystem wird die Verlagerungsbewegung des dritten Schlittens 17 in axialer Richtung 20 gemessen. Sobald das Wegmesssystemn 37 eine zu hohe Verlagerung der beiden Pusherglocken feststellt, wird der Servomotor 18 aktiviert, um eine entsprechende Gegenkraft aufzubringen.

### Bezugszeichenliste

### (ist Teil der Beschreibung)

- 1: Linke Pusherglocke
- 2: Rechte Pusherglocke
- 3: Zweiter Schlitten
- 4: Dritter Schlitten
- 5: Linker Bombierbalg für Seitenwand und/oder Karkasseinlagenende
- 6: rechter Bombierbalg für Seitenwand und/oder Karkasseinlagenende
- 7: Welle für Bombiertrommel
- 8: bombierte Reifenkarkasse
- 9: linker Bombierkopf
- 10: rechter Bombierkopf
- 11: linke Seitenwand
- 12: rechte Seitenwand
- 13: Antrieb für zweiten Schlitten
- 14: Antrieb für ersten Schlitten
- 15: Rohlingsmitte in der Ausgangsposition
- 16: Mittelachse der Trommelwelle
- 17: Dritter Schlitten
- 18: Servomotor für den dritten Schlitten
- 19: Kugelgewindetrieb
- 20: Axiale Richtung
- 21: Zweite Antriebspindel für zweiten Schlitten
- 22: Erste Antriebspindel für ersten Schlitten
- 23: Schienensystem
- 24: Obere Führungsschiene
- 25: Untere Führungsschiene
- 26: Lagerungen für Antriebsspindeln
- 27: Ursprüngliche Symmetrielinie der Pusherglocken bzw. Rohlingsmitte
- 28: Symmetrielinie der Pusherglocken bzw. Rohlingsmitte nach Mittenversatz
- 29: Gewinde
- 30: Kugelgewindetrieb
- 31: Mutter
- 32: Passfeder
- 33: Führungsnut am dritten Schlitten
- 34: Rechtes Federelement
- 35: Linkes Federelement
- 36: Haltemittel
- 37: Lineares Wegmesssystem
- 38: Gehäuse

## Patentansprüche

1. Vorrichtung zur Herstellung eines Fahrzeugreifens mit einer Bombiertrommel, wobei die Bombiertrommel eine Welle (7), zwei Bombierköpfe (9, 10), zwei Bombierbälge (11, 12) und zwei in axialer Richtung (20) verfahrbare Pusherglocken (1,2) aufweisen,
wobei die beiden Pusherglocken (1, 2) jeweils auf einem ersten und zweiten verfahrbaren Schlitten (3, 4) gelagert sind,
wobei die verfahrbaren Schlitten (3, 4) auf einem Schienensystem (24, 25) gelagert sind und mit Antrieben (13, 14) in axialer Richtung (20) entlang des Schienensytems (24, 25) beweglich ausgebildet sind,
**dadurch gekennzeichnet, dass**
die Antriebe (13, 14) für den ersten und zweiten verfahrbaren Schlitten (3, 4) mit den jeweiliegen Antriebspindeln (21, 22) an einem dritten Schlitten (17) gelagert sind, wobei alle drei Schlitten (3, 4, 17) beweglich zur Rohlingsmitte (15) an dem Schienensystem gelagert sind,
wobei über den dritten Schlitten (17) eine schwimmende Lagerung der beiden Pusherglocken (1, 2) in Bezug auf die Rohlingsmitte (15) erreicht wird,
wobei am dritten Schlitten (17) ein Ausgleichsmittel (18) angeordnet ist und mit dem Ausgleichsmittel (18) eine Verlagerungsbewegung des Mittenversatzes der beiden Pusherglocken (1, 2) in Bezung auf die Rohlingsmitte (15) reguliert wird.

2. Vorrichtung nach Anspruch 1,
**dadurch gekennzeichnet, dass**
das Ausgleichsmittel ein Servomotor (18) mit einem Kugelgewindetrieb (19) ist.

3. Vorrichtung nach Anspruch 2,
**dadurch gekennzeichnet, dass**
der Kugelgewindetrieb (19) über ein koaxial angeordnetes Gewinde (29) mit dem dritten Schlitten (17) gekoppelt ist.

4. Vorrichtung nach einem der vorhergehenden Ansprüche 2 bis 3,
**dadurch gekennzeichnet, dass**
der Kugelgewindetrieb (30) über eine koaxial angeordnete Mutter (31) und Federelementen (34) mit dem dritten Schlitten (17) gekoppelt ist.

5. Vorrichtung nach Anspruch 4,
**dadurch gekennzeichnet, dass**
die Mutter (31) des Kugelgewindetriebes (30) beidseitig von Federelementen (34) eingespannt ist und die Federelemente (34) an den äußeren Seiten mit einem Haltemittel (36) am dritten Schlitten (17) gehalten werden.

6. Vorrichtung nach einem der vorhergehenden Ansprüche 3 bis 5,
**dadurch gekennzeichnet, dass**
die Mutter (31) des Kugelgewindetriebes (30) mit einer Passfeder (32) in einer Führungsnut (33) am dritten Schlitten (17) in axialer Richtung (20) geführt wird.

7. Vorrichtung nach einem der vorhergehenden Ansprüche 2 bis 6,
**dadurch gekennzeichnet, dass**
beim Überschreiten eines Grenzwertes für den Mittenversatz der beiden Pusherglocken (1, 2) eine entgegenwirkende Gegenkraft mit dem Servomotor (18) auf den dritten Schlitten (17) aufgebracht wird.

8. Vorrichtung nach einem der vorhergehenden Ansprüche,
**dadurch gekennzeichnet, dass**
der Grenzwert für den Mittenversatz 4 bis 8 mm beträgt.

9. Vorrichtung nach einem der vorhergehenden Ansprüche 2 bis 8,
**dadurch gekennzeichnet, dass**
die Wegmessung des Mittenversatzes der Pusherglocken (1, 2) mit einem im Servomotor (18) angeordneten Sensor erfolgt.

10. Vorrichtung nach einem der vorhergehenden Ansprüche,
**dadurch gekennzeichnet, dass**
die Wegmessung des Mittenversatzes der Pusherglocken (1, 2) mit einem linearen Wegmesssytem (37) erfolgt,
wobei das Wegmesssystem (37) mit der Bewegung des dritten Schlitten gekoppelt ist.

11. Vorrichtung nach einem der vorhergehenden Ansprüche,
**dadurch gekennzeichnet, dass**
die Abstände der Pusherglocken (1, 2) zu einander und die Abstände der Pusherglocken (1, 2) im Verhältnis zur Rohlingsmitte (15) gemessen, überwacht und/oder geregelt werden.

## Claims

1. Apparatus for producing a vehicle tyre having a shaping drum, the shaping drum having a shaft (7), two shaping heads (9, 10), two shaping bellows (11, 12) and two pusher bells (1, 2) which can be moved in the axial direction (20), the two pusher bells (1, 2) being mounted in each case on a first and second movable carriage (3, 4), the movable carriages (3, 4) being mounted on a rail system (24, 25) and being configured such that they can be moved along the rail system (24, 25) in the axial direction (20) by way of drives (13, 14), **characterized in that** the drives (13, 14) for the first and second movable carriages (3, 4) are mounted with the respective drive spindles (21, 22) on a third carriage (17), all three carriages (3, 4, 17) being mounted on the rail system such that they can be moved with respect to the blank centre (15), floating mounting of the two pusher bells (1, 2) in relation to the blank centre (15) being achieved via the third carriage (17), a compensation means (18) being arranged on the third carriage (17), and a displacement movement of the centre offset of the two pusher bells (1, 2) in relation to the blank centre (15) being regulated by way of the compensation means (18).

2. Apparatus according to Claim 1, **characterized in that** the compensation means is a servomotor (18) having a ball screw drive (19).

3. Apparatus according to Claim 2, **characterized in that** the ball screw drive (19) is coupled to the third carriage (17) via a coaxially arranged thread (29).

4. Apparatus according to either of the preceding Claims 2 and 3, **characterized in that** the ball screw drive (30) is coupled to the third carriage (17) via a coaxially arranged nut (31) and spring elements (34).

5. Apparatus according to Claim 4, **characterized in that** the nut (31) of the ball screw drive (30) is clamped in on both sides by spring elements (34), and the spring elements (34) are held on the outer sides by way of a holding means (36) on the third carriage (17).

6. Apparatus according to one of the preceding Claims 3 to 5, **characterized in that** the nut (31) of the ball screw drive (30) is guided in the axial direction (20) by way of a feather key (32) in a guide groove (33) on the third carriage (17).

7. Apparatus according to one of the preceding Claims 2 to 6, **characterized in that**, if a limit value for the centre offset of the two pusher bells (1, 2) is exceeded, a counteracting counter-force is applied to the third carriage (17) by way of the servomotor (18).

8. Apparatus according to one of the preceding claims, **characterized in that** the limit value for the centre offset is from 4 to 8 mm.

9. Apparatus according to one of the preceding Claims 2 to 8, **characterized in that** the distance measurement of the centre offset of the pusher bells (1, 2) takes place by way of a sensor which is arranged in the servomotor (18).

10. Apparatus according to one of the preceding claims, **characterized in that** the distance measurement of the centre offset of the pusher bells (1, 2) takes place by way of a linear distance measurement system (37), the distance measurement system (37) being coupled to the movement of the third carriage.

11. Apparatus according to one of the preceding claims, **characterized in that** the spacings of the pusher bells (1, 2) from one another and the spacings of the pusher bells (1, 2) as measured in relation to the blank centre (15) are monitored and/or regulated.

## Revendications

1. Dispositif de production d'un pneu de véhicule avec un tambour de bombage,
dans lequel le tambour de bombage présente un arbre (7), deux têtes de bombage (9, 10), deux soufflets de bombage (11, 12) et deux cloches de poussée (1, 2) déplaçables en direction axiale (20),
dans lequel les deux cloches de poussée (1, 2) sont montées respectivement sur un premier et sur un deuxième chariot déplaçable (3, 4),
dans lequel les chariots déplaçables (3, 4) sont montés sur un système de rails (24, 25) et sont réalisés sous forme déplaçable en direction axiale (20) le long du système de rails (24, 25) au moyen d'entraînements (13, 14),
**caractérisé en ce que** les entraînements (13, 14) pour le premier et le deuxième chariots déplaçables (3, 4) sont montés sur un troisième chariot (17) avec les broches d'entraînement respectives (21, 22),
dans lequel les trois chariots (3, 4, 17) sont tous montés de façon mobile vers le milieu de l'ébauche (15) sur le système de rails,
dans lequel un appui flottant des deux cloches de poussée (1, 2) par rapport au milieu de l'ébauche (15) est obtenu au moyen du troisième chariot (17),
dans lequel un moyen d'équilibrage (18) est disposé sur le troisième chariot (17) et un mouvement de déplacement du décalage des centres des deux cloches de poussée (1, 2) par rapport au milieu de l'ébauche (15) est régulé avec le moyen d'équilibrage (18).

2. Dispositif selon la revendication 1, **caractérisé en ce que** le moyen d'équilibrage est un servomoteur (18) avec une vis d'entraînement à billes (19).

3. Dispositif selon la revendication 2, **caractérisé en ce que** la vis d'entraînement à billes (19) est couplée au troisième chariot (17) par l'intermédiaire d'un filet (29) disposé de façon coaxiale.

4. Dispositif selon l'une des revendications précédentes 2 à 3, **caractérisé en ce que** la vis d'entraînement à billes (30) est couplée au troisième chariot (17) par l'intermédiaire d'un écrou (31) disposé de façon coaxiale et d'éléments de ressort (34).

5. Dispositif selon la revendication 4, **caractérisé en ce que** l'écrou (31) de la vis d'entraînement à billes (30) est serré de part et d'autre par des éléments de ressort (34) et les éléments de ressort (34) sont maintenus sur le côté extérieur avec un moyen de retenue (36) sur le troisième chariot (17).

6. Dispositif selon l'une quelconque des revendications précédentes 3 à 5, **caractérisé en ce que** l'écrou (31) de la vis d'entraînement à billes (30) est guidé en direction axiale (20) avec un ressort d'ajustage (32) dans une rainure de guidage (33) sur le troisième chariot (17).

7. Dispositif selon l'une quelconque des revendications précédentes 2 à 6, **caractérisé en ce qu'**en cas de dépassement d'une valeur limite pour le décalage des centres des deux cloches de poussée (1, 2), une force antagoniste opposée est appliquée au troisième chariot (17) avec le servomoteur (18).

8. Dispositif selon l'une quelconque des revendications précédentes, **caractérisé en ce que** la valeur limite pour le décalage des centres vaut de 4 à 8 mm.

9. Dispositif selon l'une quelconque des revendications précédentes 2 à 8, **caractérisé en ce que** la mesure de la course du décalage des centres des cloches de poussée (1, 2) est effectuée avec un capteur disposé dans le servomoteur (18).

10. Dispositif selon l'une quelconque des revendications précédentes, **caractérisé en ce que** la mesure de la course du décalage des centres des cloches de poussée (1, 2) est effectuée avec un système de mesure de course linéaire (37), dans lequel le système de mesure de course (37) est couplé au mouvement du troisième chariot.

11. Dispositif selon l'une quelconque des revendications précédentes, **caractérisé en ce que** les distances des cloches de poussée (1, 2) l'une de l'autre et les distances des cloches de poussée (1, 2) par rapport au milieu de l'ébauche (15) sont mesurées, surveillées et/ou régulées.
